# NEUE EUROPÄISCHE PATENTSCHRIFT

(11) **EP 2 545 813 B2**
(45) Veröffentlichungstag und Bekanntmachung des Hinweises auf die Entscheidung über den Einspruch: **21.07.2021**
(45) Hinweis auf die Patenterteilung: 12.03.2014
(21) Anmeldenummer: 12164532.9
(22) Anmeldetag: 18.04.2012
(51) Int. Cl.: A47F 1/12

(54) **Warenvorschubeinsatz für ein Warenvorschubsystem**
Goods pusher insert for a goods pusher system
Insert d'avancement de marchandises pour un système d'avancement de marchandises

(30) Priorität: 15.07.2011 DE 102011051857
(43) Veröffentlichungstag der Anmeldung: 16.01.2013
(73) Patentinhaber: Bruegmann GmbH & Co. KG, 58093 Hagen (DE)
(72) Erfinder: Brügmann, Lars, 58093 Hagen (DE)
(74) Vertreter: Schweiger, Johannes

(56) Entgegenhaltungen:
- WO-A1-2009/075409
- US-A- 6 089 385
- US-B1- 6 830 146

## Beschreibung

Die Erfindung betrifft einen Warenvorschubeinsatz für ein Warenvorschubsystem (Patentanspruch 4) zur selbsttätigen Beförderung von entlang dem Warenvorschubeinsatz in einer Beförderungsrichtung B angeordneten Waren zu einer Sichtkante eines mit dem Warenvorschubsystem ausgestatteten Regals nach Patentanspruch 1.

Sowohl in Einzelhandels- als auch Großhandelsgeschäften wie beispielsweise Drogerien, Lebensmittelgeschäften, Discount-Geschäften, Spielzeuggeschäften und dergleichen sind Regale zum Lagern und Ausstellen von Produkten erforderlich. Beim Aufstellen und auch Lagern des Produktes ist es erwünscht, dass das jeweilige Produkt auf den Regalböden an der Vorderseite möglichst in Flucht mit den benachbarten Produkten liegt, sodass das Produkt für den Verbraucher gut sichtbar und zugänglich ist und die Anordnung der Produkte ästhetisch ansprechend ist. Um eine solche Anordnung der Produkte zu bewerkstelligen, umfassen bekannte Systeme die Verwendung eines Schubsystems, um das jeweilige Produkt oder die Reihe von Produkten in Richtung der Vorderseite des Regals zu schieben, wenn das vorderste Produkt entnommen wird oder Produkte aufgefüllt werden.

Zur Abtrennung benachbarter Produktreihen können Teilungsplatten vorgesehen sein.

Ein solches Warenvorschubsystem ist beispielsweise in der WO 2009/097655 A1 gezeigt, das eine Vielzahl von Warenvorschubeinsätzen, bestehend aus einem rollenaufnehmenden inneren Gehäuse und einem das innere Gehäuse aufnehmenden äußeren Gehäuse und zwei auf das äußere Gehäuse vorn und hinten aufsteckbaren Endkappen besteht, die gemäß Figur 7 in geneigter Anordnung auf einem Träger aufgebracht werden. Der Warenvorschub erfolgt durch Schrägstellung, also ohne mechanischen oder elektrischen Kraftaufwand/Energieeinsatz, nämlich allein durch die Gewichtskraft. Ein ähnliches Warenvorschubsystem wird in der WO 2009/075409 A1 gezeigt. Druckschrift US 2 696 283 zeigt einen gattungsgemäßen Warenvorschubeinsatz.

Aufgabe der vorliegenden Erfindung ist es, einen einfacher montierbaren und kostengünstiger herstellbaren Warenvorschubeinsatz vorzusehen.

Diese Aufgabe wird mit den Merkmalen der Patentansprüche 1 und 4 gelöst. Vorteilhafte Weiterbildungen der Erfindung sind in den Unteransprüchen angegeben und in den Rahmen der Erfindung fallen auch sämtliche Kombinationen aus zumindest zwei von in der Beschreibung, den Ansprüchen und/oder den Figuren angegebenen Merkmalen.

Grundidee der vorliegenden Erfindung ist es, statt eines äußeren Gehäuses zur Fixierung der Beförderungsrollen auf einem Rollenträger zwei unabhängig voneinander an die gegenüberliegenden Seiten des Rollenträgers aufclipsbare, insbesondere aus Kunststoff, vorzugsweise als Kunststoffprofil, hergestellte, Profilschienen vorzusehen. Besonders vorteilhaft ist bei der vorliegenden Erfindung, dass der Warenvorschubeinsatz aus einem einheitlichen Material herstellbar ist.

Durch die erfindungsgemäße Ausgestaltung kann einerseits mit ein- und derselben Profilschiene eine unterschiedliche Breite des Warenvorschubeinsatzes realisiert werden, sodass der erfindungsgemäße Warenvorschubeinsatz flexibler einsetzbar ist. Andererseits wird weniger unterschiedliches Material für die Fixierung der Beförderungsrollen auf dem Rollenträger benötigt. Die erfindungsgemäßen Profilschienen weisen darüber hinaus ein geringeres Gewicht als vergleichsweise Profilschienen mit Beförderungsrollen gemäß dem Stand der Technik auf. Hierdurch werden auch die Materialkosten gesenkt.

Indem gemäß einer Ausführungsform der Erfindung ein an gegenüberliegenden Enden des Rollenträgers angeordnetes erstes und/oder zweites Fixierabschnitt zur Anbringung des Warenvorschubeinsatzes an dem Regal integral mit dem Rollenträger ausgebildet ist/sind, wird die Herstellung des Warenvorschubeinsatzes stark vereinfacht und nochmals kostengünstiger.

Gemäß der Erfindung ist vorgesehen, dass die Profilschienen als U-Profil und den Rollenträger im U-Profil aufnehmend ausgebildet sind, wobei die Rastmittel jeweils an Innenwänden der Profilschienen angeordnet sind. Auf diese Weise wird eine möglichst einfache, aber wirkungsvolle Verbindung zwischen den Profilschienen und dem Fixierabschnitt erreicht, sodass der Rollenträger und die Beförderungsrollen sicher in ihrer Funktionsposition gehalten werden.

Gemäß der Erfindung ist vorgesehen, dass die Rastmittel jeweils aus einer oberen Rastnase und einer gegenüberliegenden unteren Rastnase sowie jeweils korrespondierenden Einrastelementen bestehen. Durch diese Maßnahme wird der erfindungsgemäße Warenvorschubeinsatz in der Zahl der Bauteile weiter vereinfacht und hierdurch vereinfacht sich auch die Montage des Warenvorschubeinsatzes, sodass die Herstellungskosten reduziert werden.

Soweit die oberen Rastnasen erfindungsgemäß an einem oberen Schenkel der Profilschienen angeordnet sind, wird die Montage des erfindungsgemäßen Warenvorschubeinsatzes weiter vereinfacht.

Gemäß der Erfindung ist vorgesehen, dass zu den oberen Rastnasen korrespondierende obere Einrastelemente zumindest teilweise an oberen Enden von Stegen von Beförderungsrollenaufnahmen zur Lagerung von Beförderungsrollen vorgesehen sind. Durch diese Maßnahme wird die Zahl der Funktionselemente weiter reduziert und die Montage stark vereinfacht.

Insbesondere die klemmende Aufnahme in Kombination mit der Verformung der Profilschienen bewirkt eine besonders einfache Montage, da keine zusätzlichen Hilfsmittel erforderlich sind und die Profilschienen voneinander unabhängig für eine Fixierung der Beförderungsrollen im Rollenträger Sorge tragen.

Mit Vorteil ist weiterhin vorgesehen, dass zur einfacheren Montage, insbesondere ohne Hilfsmittel, die unteren Rastnasen jeweils eine zum Rollenträger gerichtete Fase aufweisen.

Gemäß einer weiteren bevorzugten Ausführungsform der Erfindung ist vorgesehen, dass die Profilschienen fluchtend in dem ersten und/oder zweiten Fixierabschnitt ausgebildet sind. Dadurch weisen die Profilschienen eine ebene seitliche Außenkontur auf und lassen sich auf einfache Weise stapeln, transportieren und einbauen.

Die Erfindung betrifft außerdem ein Warenvorschubsystem mit mindestens einem im Warenvorschubsystem zu einer Sichtkante eines Warenvorschubeinsatzes geneigten Warenvorschubeinsatz nach einem der vorhergehenden Ansprüche. Die vorgenannten Vorteile, Merkmale und Ausführungsformen gelten auch für das erfindungsgemäße Warenvorschubsystem analog.

Weitere Vorteile, Merkmale und Einzelheiten der Erfindung ergeben sich aus der nachfolgenden Beschreibung bevorzugte Ausführungsbeispiele sowie anhand der Zeichnungen. Diese zeigen in:
- Fig. 1:: eine perspektivische Ansicht einer Ausführungsform eines erfindungsgemäßen Warenvorschubeinsatzes in montiertem Zustand und
- Fig. 2:: eine perspektivische Explosionsdarstellung eines des Warenvorschubeinsatzes gemäß Figur 1.

In den Figuren sind gleiche oder gleichwirkende Bauteile mit gleichen Bezugszeichen dargestellt.

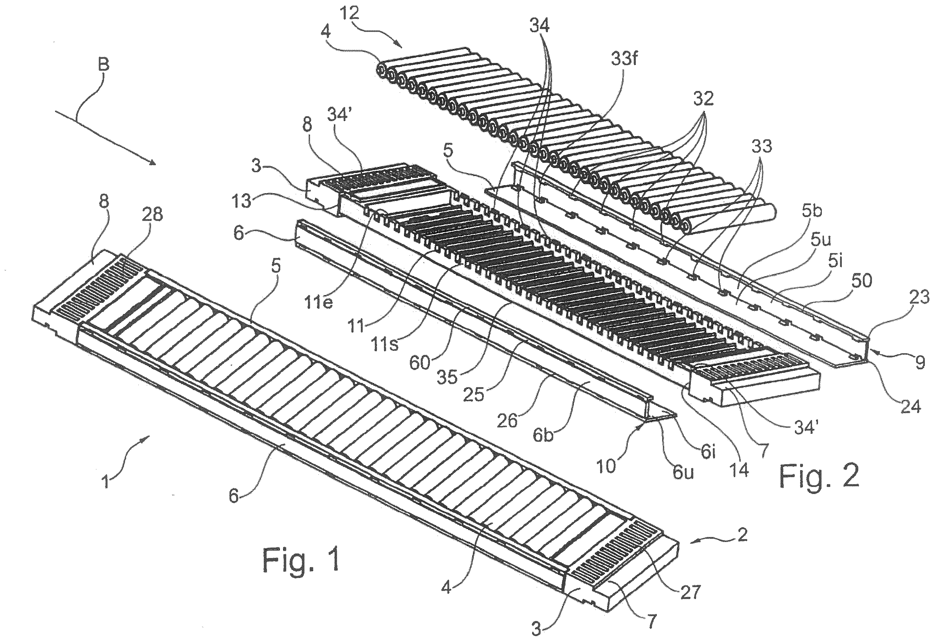

In Figur 1 ist ein zerlegter Warenvorschubeinsatz 1 dargestellt, wie er beispielsweise in auf einem Regalboden gemäß Figur 7 aus der WO 2009/097655 dargestellt und beschrieben zum Einsatz kommt.

Je nach Größe der durch einen oder mehrere Warenvorschubeinsätze 1 zu einer Sichtkante 2 in einer Beförderungsrichtung B zu befördernden Waren können unterschiedliche oder mehrere der Warenvorschubeinsätze 1 zum Einsatz kommen. Diese können außerdem durch Teiler unterstützt werden, damit eine saubere Führung der auf den Regalen angeordneten Produkte, beispielsweise nach Warengruppen getrennt, auf einfache Art und Weise ermöglicht wird.

Der Warenvorschubeinsatz 1 umfasst einen Rollenträger 3 zur Aufnahme eines Satzes von Beförderungsrollen 4, die in dem Rollenträger 3 in korrespondierenden Beförderungsrollenaufnahmen 11 gelagert sind.

Die Beförderungsrollen 4 sind quer zur Beförderungsrichtung B angeordnet und sowohl der Rollenträger 3 als auch die Beförderungsrollen 4 sind mit Vorteil aus Kunststoff gebildet, um einerseits eine reibungsarme und andererseits eine leise Beförderung zu ermöglichen. Darüber hinaus ist die Herstellung des Rollenträgers 3 und der Beförderungsrollen 4 aus Kunststoff kostengünstig möglich.

Die Beförderungsrollen 4 bilden eine Rollenbahn 12 und durch die schräge Anordnung des Warenvorschubeinsatzes 1 auf dem Träger werden auf der Rollenbahn 12 aufgesetzte Produkte automatisch zu der Sichtkante 2 befördert. Hierzu ist kein Kraftaufwand erforderlich.

Die Beförderungsrollen 4 bestehen aus einem zylindrischen Förderabschnitt 4f mit einem konstanten Durchmesser D sowie jeweils an den gegenüberliegenden Enden 4e angeformten Lagerstiften 4s mit einem Durchmesser d zum Eingriff in jeweils gegenüberliegende Beförderungsrollenaufnahmen 11. Jeweils seitlich in und entgegen der Beförderungsrichtung B sind Stege 11 s zur Begrenzung der Bewegung der Beförderungsrollen 4 vorgesehen, deren oberes Ende 11e jeweils etwa bündig mit den Lagerstiften 4s abschließt.

Damit die Beförderungsrollen 4 in den Beförderungsrollenaufnahmen 11 gesichert sind, sind seitlich Profilschienen 5, 6 mit einem U-Profil derart auf den Rollenträger 3 aufclipsbar, dass die Beförderungsrollen 4 in der jeweiligen Beförderungsrollenaufnahme 11 so fixiert sind, dass die Beförderungsrollen 4 frei rotieren, jedoch nicht aus ihrer Beförderungsrollenaufnahme 11 herausspringen können. Die Profilschienen 5, 6 sind mit Vorteil als Kunststoffprofil ausgebildet.

Der Rollenträger 3 weist an den beiden in Beförderungsrichtung B gegenüberliegenden Enden der Rollenbahn 12 jeweils einen Fixierabschnitt 7, 8 auf, die insbesondere achsensymmetrisch zur Rollenbahn ausgebildet und an dem Rollenträger 3 einstückig angeformt sind.

Zur Montage werden die Profilschienen 5, 6 quer zur Beförderungsrichtung B auf den Rollenträger 3 aufgeclipst, wobei die Profilschienen 5, 6 an gegenüberliegend zueinander ausgerichteten Anschlägen 13, 14 der Fixierabschnitte 7, 8 bündig anliegen. Die Profilschienen 5, 6 fluchten jeweils mit den Seiten der Fixierabschnitte 7, 8.

Die Profilschienen 5, 6 weisen mehrere, an einer Innenwand 5i, 6i des U-Profils der Profilschienen 5, 6 angeordnete obere Rastnasen 32 sowie diesen im U-Profil gegenüberliegend angeordnete untere Rastnasen 33 als Rastmittel auf. Diese sind jeweils in korrespondierende, entlang den Seiten des Rollenträgers 3 verteilt angeordnete obere und untere Einrastelemente 34, 35 einrastbar (Rastmittel). Im gezeigten Ausführungsbeispiel sind jeweils zwölf obere und zwölf untere Rastnasen 32, 33 an jeder Profilschiene 5, 6 sowie jeweils zwölf obere und untere Einrastelemente 34, 35 an den beiden gegenüberliegenden Seiten des Rollenträgers 3 vorgesehen.

Die oberen Rastnasen 32 sind jeweils am kurzen oberen Schenkel 5o, 6o der Profilschienen 5, 6 angeformt, während die unteren Rastnasen 33 jeweils am langen unteren Schenkel 5u, 6u der Profilschienen 5, 6 angeformt sind. Die Böden 5b, 6b verbinden jeweils die beiden Schenkel 5o, 6o, 5z, 6u.

Die oberen Einrastelemente 34 sind überwiegend (mit Ausnahme der vorderen und hinteren oberen Einrastelemente 34') an den oberen Enden 11e der Stege 11s als zu der Rollenbahn 12 weisende Absätze vorgesehen, die von den oberen Rastnasen 32 hintergriffen werden. Dabei ist es vorteilhaft, nur jeden n-ten (hier: jeden dritten) der Stege 11s, insbesondere mindestens jeden zweiten, als Rastmittel auszubilden.

Die Montage erfolgt durch schräges Aufsetzen der oberen Rastnasten 32 der Profilschienen 5, 6 auf die jeweiligen oberen Einrastelemente 34. Anschließend werden die Profilschienen 5, 6 bei eingerasteten Rastnasen 32 rotiert, so dass die mit Fasen 33f versehenen unteren Rastnasen 33 über die unteren Einrastelemente 35 in Form eines durchgehenden Absatzes rasten. Die unteren Schenkel 5u, 6u der U-Profile sind länger ausgebildet und dienen als Hebel, so dass die Profilschienen 5, 6 durch Anheben der unteren Schenkel 5u, 6u wieder gelöst werden können.

Hierzu müssen die unteren Rastnasen 33 über die unteren Einrastelemente 35 gehoben werden.

Der Boden 5b der Profilschiene 5 bildet gleichzeitig eine Profilierung 9, und zwar auf der dem U-Profil zur Aufnahme des Rollenträgers 3 gegenüberliegenden Seite, wobei die Profilierung 9 in der gezeigten Ausführungsform zwei jeweils zu den Schenkeln 5o, 6o, 5u, 6u fluchtend Seitenwangen 23, 24 aufweist.

Der Boden 6b der Profilschiene 6 bildet eine zur Profilierung 9 korrespondierende Profilierung 10, indem der Boden 6b an den Boden 5b' eines korrespondierenden Warenvorschubeinsatzes 1' zur Anlage kommt. Die Profilierung 10 weist insofern zu den Seitenwangen 23, 24 korrespondierende Ausnehmungen 25, 26, hier in Form von Absätzen, auf. Die Profilierungen 9 und 10 sind in diesem Ausführungsbeispiel als Nut-und-Feder-Verbindung ausgebildet.

Bis auf die Profilierungen 9, 10 sind die Profilschienen 5, 6 zueinander symmetrisch ausgebildet. Auf Grund der Ausgestaltung als unabhängige Profilschienen 5, 6 können der Rollenträger 3 und die Rollenbahn 12 verschiedene Breiten aufweisen.

Die ersten und zweiten Fixierabschnitte 7, 8 weisen eine Vielzahl von Teileraufnahmen 27, 28 auf, die quer zur Beförderungsrichtung B entlang der ersten und zweiten Fixierabschnitte 7, 8 und jeweils zueinander fluchtend angeordnet sind. Korrespondierende Teileraufnahmen 27, 28 sind zur leichteren Zuordnung der jeweils korrespondierenden Teileraufnahmen 27, 28 mit korrespondierenden Kennzeichnungen versehen.

### Warenvorschubeinsatz für ein Warenvorschubsystem

### Bezugszeichenliste

- B: Beförderungsrichtung
- 1: Warenvorschubeinsatz
- 2: Sichtkante
- 3: Rollenträger
- 4: Beförderungsrollen
- 5: Profilschiene
- 5b: Boden
- 5o: oberer Schenkel
- 5u: unterer Schenkel
- 5i: Innenwand
- 6: Profilschiene
- 6b: Boden
- 6o: oberer Schenkel
- 6u: unterer Schenkel
- 6i: Innenwand
- 7: erstes Fixierabschnitt
- 8: zweites Fixierabschnitt
- 9: Profilierung
- 10: Profilierung
- 11: Beförderungsrollenaufnahme
- 11e: Obere Enden
- 11s: Stege
- 12: Rollenbahn
- 13: Anschläge
- 14: Anschläge
- 23, 24: Seitenwangen
- 25, 26: Ausnehmungen
- 27, 28: Teileraufnahmen
- 32: Obere Rastnasen
- 3 3: Untere Rastnasen
- 33f: Fasen
- 34: Obere Einrastelemente
- 35: Untere Einrastelemente

## Patentansprüche

1. Warenvorschubeinsatz (1) für ein Warenvorschubsystem zur selbsttätigen Beförderung von entlang dem Warenvorschubeinsatz (1) in einer Beförderungsrichtung B angeordneten Waren zu einer Sichtkante (2) eines mit dem Warenvorschubsystem (1) ausgestatteten Regals mit einem Satz von auf einem Rollenträger (3) quer zur Beförderungsrichtung B gelagerten Beförderungsrollen (4) und zwei unabhängig voneinander an gegenüberliegenden Seiten des Rollenträgers (3) anbringbaren Profilschienen (5, 6) zur Halterung der Beförderungsrollen (4) auf dem Rollenträger (3),
**dadurch gekennzeichnet, dass** die Profilschienen (5, 6) mit jeweils mindestens drei in Beförderungsrichtung entlang des Rollenträgers (3) und den Profilschienen (5, 6) verteilten Rastmitteln (32, 33, 34, 35) an den gegenüberliegenden Seiten des Rollenträgers (3) aufclipsbar sind, wobei die Profilschienen (5, 6) als U-Profil und den Rollenträger (3) im U-Profil aufnehmend ausgebildet sind, wobei die Rastmittel (32, 33, 34, 35) jeweils an Innenwänden (5i, 6i) der Profilschienen (5, 6) angeordnet sind, wobei die Rastmittel (32, 33, 34, 35) jeweils aus einer oberen Rastnase (32) und einer gegenüberliegenden unteren Rastnase (33) sowie jeweils korrespondierenden Einrastelementen (34, 35) bestehen, wobei die oberen Rastnasen (32) an einem oberen Schenkel (5o) der Profilschienen (5, 6) angeordnet sind, wobei zu den oberen Rastnasen (32) korrespondierende obere Einrastelemente (34) zumindest teilweise an oberen Enden (11e) von Stegen (11s) von Beförderungsrollenaufnahmen (11) zur Lagerung von Beförderungsrollen (4) vorgesehen sind.

2. Warenvorschubeinsatz gemäß Anspruch 1, **dadurch gekennzeichnet, dass** ein an gegenüberliegenden Enden des Rollenträgers angeordnetes erstes und/oder zweites Fixierabschnitt (7, 8) zur Anbringung des Warenvorschubeinsatzes an dem Regal integral mit dem Rollenträger (3) ausgebildet ist/sind.

3. Warenvorschubeinsatz gemäß Anspruch 1, **dadurch gekennzeichnet, dass** die unteren Rastnasen (33) jeweils eine zum Rollenträger (3) gerichtete Fase (33f) aufweisen.

4. Warenvorschubsystem mit mindestens einem im Warenvorschubsystem zu einer Sichtkante (2) eines Warenvorschubeinsatzes (1) geneigten Warenvorschubeinsatz (1) nach einem der vorgehenden Ansprüche.

## Claims

1. A merchandise feed insert (1) for a merchandise feed system for automatic conveyance of merchandise located along the merchandise feed insert (1) in one transport direction B to one visible edge (2) of a shelf equipped with the merchandise feed system (1) with a set of transport rolls (4) which are supported on a roll carrier (3) transversely to the transport direction B and two profile rails (5, 6) which can be attached independently of one another on opposite sides of the roll carrier (3) for holding the transport rolls (4) on the roll carrier (3),
**characterized in that** the profile rails (5, 6) are clipped to opposite sides of the roll carrier (3) with at least three catch means (32, 33, 34, 35) at a time which are distributed in the transport direction along the roll carrier (3) and/or the profile rails (5, 6),
wherein the profile rails (5, 6) are made as a U-profile and to hold the roll carrier (3) in the U-profile, the catch means (32, 33, 34, 35) being arranged on inside walls (5i, 6i) of the profile rails (5, 6),
wherein the catch means (32, 33, 34, 35) each consists of an upper catch projection (32) and an opposite lower catch projection (33) as well as corresponding snap-in elements (34, 35), wherein the upper catch projections (32) are located on an upper leg (5o) of the profile rails (5, 6),
wherein upper snap-in elements (34) corresponding to the upper catch projections (32) are provided at least partially on upper ends (11e) of webs (11s) of transport roll holders (11) for supporting the transport rolls (4).

2. The merchandise feed insert as claimed in Claim 1, wherein a first and/or second fixing section (7, 8) which is located on opposite ends of the roll carrier is/are made integrally with the roll carrier (3) for bringing the merchandise feed insert to the shelf.

3. The merchandise feed insert as claimed in claim 1, wherein the lower catch projections (33) each have a bevel (33f) pointed toward the roll carrier (3).

4. A merchandise feed system with at least one merchandise feed insert (1) which is tilted in the merchandise feed system to one visible edge (2) of a merchandise feed insert (1) as claimed in one of the preceding claims.

## Revendications

1. Insert d'avance de marchandises (1) pour système d'avance de marchandises pour le convoyage automatique de marchandises disposées le long de l'insert d'avance de marchandises (1) dans un sens de convoyage B vers un bord de visibilité (2) d'une étagère équipée du système d'avance de marchandises (1) à l'aide d'un jeu de rouleaux convoyeurs (4) s'appuyant sur un porte-rouleaux (3) transversalement au sens de convoyage B et de deux rails profilés (5, 6) pouvant être posés indépendamment l'un de l'autre sur des faces opposées du porte-rouleaux (3) afin de maintenir les rouleaux convoyeurs (4) sur le porte-rouleaux (3),
**caractérisé en ce que** les rails profilés (5, 6) peuvent être clipsés à l'aide d'au moins trois moyens d'enclenchement (32, 33, 34, 35) répartis dans le sens de convoyage le long du porte-rouleaux (3) et/ou des rails profilés (5, 6) sur les côtés opposés du porte-rouleaux (3,
dans lequel les rails profilés (5, 6) se présentent sous forme de profilés en U recevant le porte-rouleaux (3) dans le profilé en U, les moyens d'enclenchement (32, 33, 34, 35) étant disposés respectivement sur des parois intérieures (5i, 6i) des rails profilés (5, 6),
dans lequel les moyens d'enclenchement (32, 33, 34, 35) sont composés respectivement d'un bec d'enclenchement supérieur (32) et d'un bec d'enclenchement inférieur opposé (33) ainsi que d'éléments d'enclenchement respectivement correspondants (34, 35),
dans lequel les becs d'enclenchement supérieurs (32) sont disposés sur une branche supérieure (50) des rails profilés (5, 6),
dans lequel il est prévu des éléments d'enclenchement supérieurs (34) correspondant respectivement aux becs d'enclenchement supérieurs (32) au moins partiellement aux extrémités supérieures (11e) des traverses (11s) de supports de rouleaux convoyeurs (11) pour l'appui de rouleaux convoyeurs (4).

2. Insert d'avance de marchandises selon la revendication 1, **caractérisé en ce qu'**un premier et/ou second segment de fixation (7, 8) disposé sur des côtés opposés du porte-rouleaux et servant à poser l'insert d'avance de marchandises sur l'étagère forme(nt) bloc avec le porte-rouleaux (3).

3. Insert d'avance de marchandises selon la revendication 1, caractérisé en ce les becs d'enclenchement inférieurs (33) présentent respectivement un biseau (33f) tourné vers le porte-rouleaux (3).

4. Système d'avance de marchandises comprenant au moins un insert d'avance de marchandises (1) incliné vers un bord de visibilité (2) d'un insert d'avance de marchandises (1) selon une des revendications précédentes.
